# FASCICULE DE BREVET EUROPEEN

(11) **EP 0 515 287 B1**
(45) Date de publication et mention de la délivrance du brevet: **04.01.1995**
(21) Numéro de dépôt: 92401414.5
(22) Date de dépôt: 22.05.1992
(51) Int. Cl.: B60K 37/00, B62D 25/14

(54) **Planche de bord perfectionnée**
Armaturenbrett eines Kraftfahrzeugs
Dashboard for automotive vehicle

(30) Priorité: 24.05.1991 FR 9106294
(43) Date de publication de la demande: 25.11.1992
(73) Titulaire: ECIA - EQUIPEMENTS ET COMPOSANTS POUR L'INDUSTRIE AUTOMOBILE, F-25400 Audincourt (FR)
(72) Inventeur: Henigue, Christian, F-90100 Delle (FR); Zundel, Marcel, F-25200 Montbeliard (FR)
(74) Mandataire: Moncheny, Michel

(56) Documents cités:
- EP-A- 0 081 656
- EP-A- 0 124 093
- DE-A- 3 611 486
- DE-A- 3 806 783
- FR-A- 2 623 776
- FR-A- 2 635 069

## Description

La présente invention concerne les véhicules automobiles et, plus particulièrement, leur planche de bord.

L'invention a tout spécialement pour objet une planche de bord perfectionnée qui est nécessaire au pilotage d'un véhicule et qui est placée dans un habitacle à proximité d'un compartiment antérieur, le plus souvent moteur, qui le jouxte. L'invention a principalement pour objet une planche de bord destinée à recevoir et à supporter pour en être équipée des sous-ensembles préconfectionnés et prévérifiés, afin de constituer une entité prête à être installée dans un véhicule et fixée au moins partiellement à une cloison de celui-ci séparant le compartiment antérieur de l'habitacle.

Comme on le sait, une planche de bord de véhicule est composée d'un certain nombre de sous-ensembles qui sont placés notamment du côté de l'habitacle par rapport à la cloison ou tablier qui sépare ce dernier du compartiment antérieur qui le jouxte et dont il est contigu. Ce compartiment antérieur voisin est un coffre à bagages ou un logement où se trouve installé notamment un groupe moto-tracteur ou moto-propulseur.

Ces sous-ensembles en question comprennent, habituellement, un réceptable pour radio, une boîte à gants, un vide-poche, des ouïes de climatisation, etc...., un tableau de bord avec des cadrans tels un compte-tours, un indicateur de vitesse, une jauge à carburant, un témoin de pression d'huile de lubrification, un témoin de charge de batterie, une horloge, des boutons-poussoirs et commutateurs de commande d'appareillages tels un allume-cigare, un dégivreur de lunette-arrière, des lampes d'éclairage pour la conduite ou la signalisation, un feu-arrière de brouillard, différents témoins et signaux d'alarme, etc.., ainsi que des servitudes et sécurités relatives à l'installation électrique tels des relais et fusibles, un climatiseur avec son échangeur thermique et sa soufflerie, une colonne de direction avec son volant, un pédalier avec au besoin son assistance de freinage et de même une insonorisation ou doublure constituée, en général, de plusieurs éléments.

Il est classique de fixer séparément les constituants de ces différents sous-ensembles par exemple dans l'habitacle sur une chaîne d'assemblage. Le volume disponible pour ce faire notamment dans l'habitacle, et sa localisation sont tels que les accès et dégagements sont relativement limités et mal commodes si bien que l'installation est relativement longue, fastidieuse, pénible et donc coûteuse et source de malfaçons. En effet, la plupart du temps, l'opérateur travaillant sur la chaîne d'assemblage doit se livrer à des contorsions tout en tenant des constituants et en manipulant des outils, et aussi en faisant en sorte de les maintenir et retenir à l'encontre des forces de gravité qui tendent à les faire choir.

Pour remédier à une telle situation, des tentatives d'automatisation pour un montage à l'aide de robots et/ou d'automates ont déjà été proposées.

Une solution d'automatisation est, par exemple, exposée dans la demande de brevet européen 0 081 656. Selon ce document, les différents constituants d'un poste de conduite sont réunis à l'aide d'un bâti d'assemblage en dehors de la chaîne de montage proprement dite des véhicules et, après contrôle de l'entité qu'ils forment, la totalité des constituants de cette entité est mise en place d'un bloc dans l'habitable. On conçoit que la constitution d'un tel poste de conduite, en dehors de la chaîne d'assemblage et en fixant à demeure des constituants, pose des problèmes du fait que le contrôle n'est exécuté que lorsque la totalité de l'assemblage est terminée, sans permettre de vérifier au préalable la qualité et/ou le bon fonctionnement de chaque sous-ensemble particulier. En outre, tel que l'expose ce document, les différents constituants une fois réunis soulèvent notamment des problèmes d'accessibilité et d'interchangeabilité qui ne sont pas sans nuire à l'entretien et à la réparation éventuelle du véhicule.

En plus de ce qui est auparavant indiqué brièvement à propos de la complexité technique associée à une planche de bord, il y a lieu de tenir compte des aspects qu'elle implique sur le plan de la présentation, de l'apparence.

Il est bien connu que "l'habillage" intérieur d'un véhicule suit les tendances d'une mode et que ces tendances se traduisent aussi sur la présentation de la planche de bord. De cette tendance générale, chaque constructeur fait son interprétation en fonction des modèles produits pour une série déterminée. De plus, on sait que pour chaque modèle existent plusieurs versions fixées par le constructeur et pour chacune de ces versions différentes variantes dont le choix est laissé au gré des souhaits particuliers de l'acheteur, à titre d'options.

On imagine facilement que le nombre de solutions croît très rapidement et qu'il en résulte des problèmes de production, d'approvisionnement, de gestion et de coûts particulièrement importants, ainsi que des risques notables d'erreurs dont le nombre va aussi augmentant avec le nombre des possibilités. Ceci est d'autant plus délicat à maîtriser que, pour des raisons économiques, la production tend à se faire selon la technique dite des "flux tendus".

Le but de l'invention est de remédier à la plupart des difficultés énumérées brièvement tant techniques qu'apparentes, à l'aide d'une planche de bord perfectionnée destinée à recevoir et à supporter pour en être équipée, des sous-ensembles préconfectionnés et prévérifiés afin de constituer une entité prête à être installée dans un véhicule et à être fixée notamment à une cloison de celui-ci séparant un compartiment antérieur d'un habitacle.

L'invention a pour objet une planche de bord destinée à recevoir et à supporter pour en être équipée des sous-ensembles préconfectionnés et prévérifiés d'un poste de conduite afin de constituer une entité prête à être installée dans un véhicule et à être fixée notamment à une cloison de celui-ci qui sépare un compartiment antérieur d'un habitacle de la structure du véhicule et qui est transpercée d'un ajour avec des zones de fixation. Cette planche de bord est caractérisée en ce qu'elle comprend, d'une part en permanence une ossature rigide, autoportante qui sert de support et qui est munie d'une poutre en caisson, et qu'elle comprend, entre autres, d'autre part un revêtement rigide, rapporté et amovible qui fixe approximativement la forme extérieure de la planche de bord et enfin une garniture rapportée et amovible qui épouse ce revêtement et fixe l'apparence de la planche de bord.

D'autres caractéristiques preférées et avantages de l'invention ressortiront de la lecture de la description et des revendications qui suivent ainsi que l'examen du dessin annexé, donné seulement à titre d'exemple, où :
- la Figure 1 est une vue perspective partielle d'une structure ou coque, classique d'un véhicule automobile traditionnel, telle qu'elle se présente du côté habitacle;

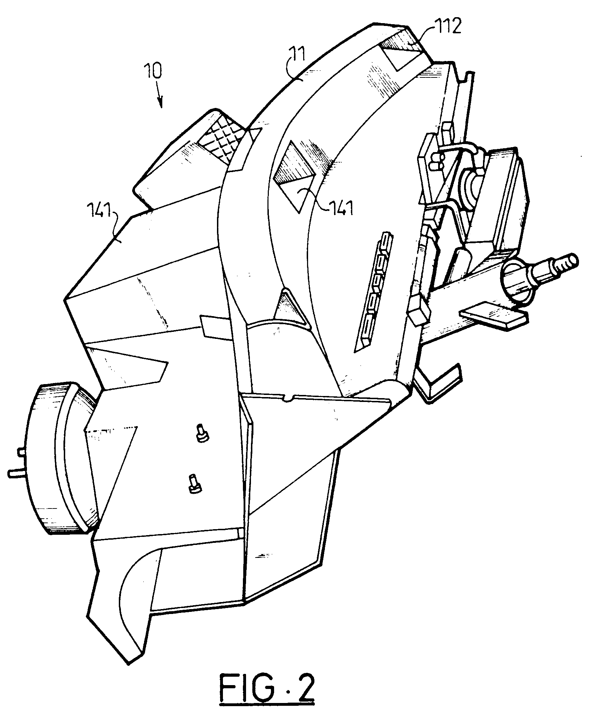

- la Figure 2 est une vue perspective, prise de la gauche, côté habitacle d'une ossature partiellement équipée;

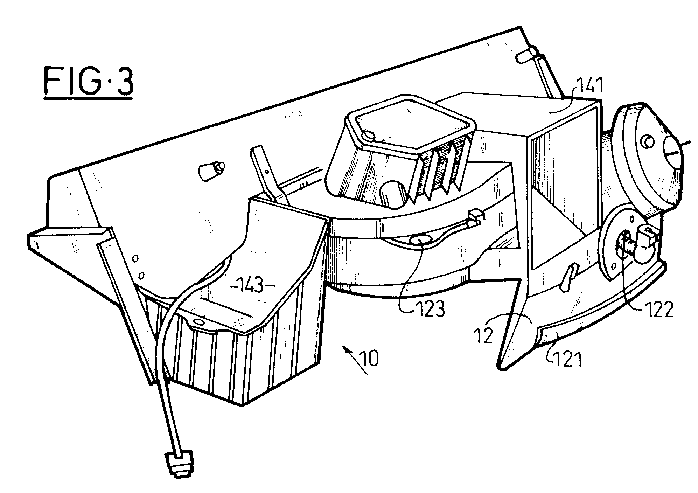

- la Figure 3 est une vue perspective de l'ossature de la Figure 2, prise de la droite côté compartiment antérieur;

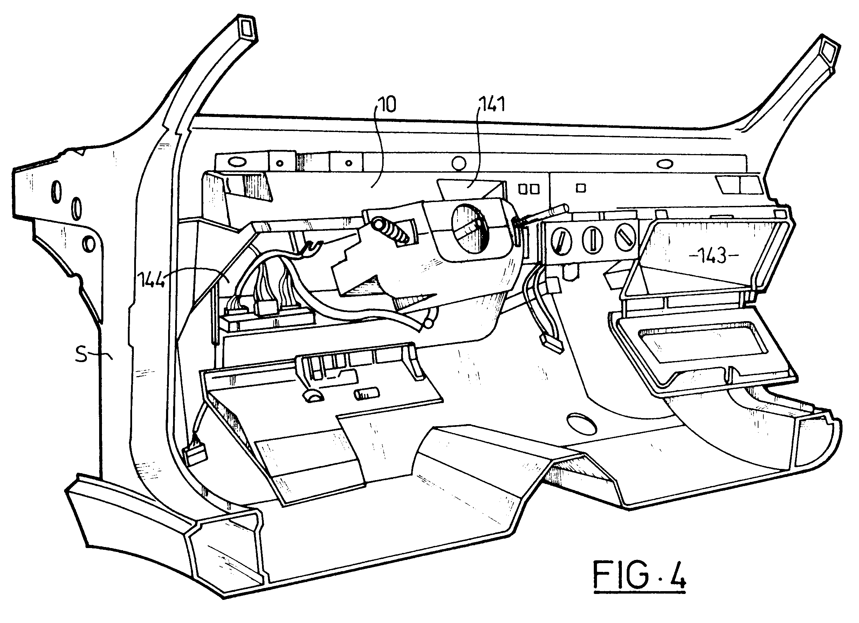

- la Figure 4 est une vue perspective de l'ossature de la Figure 2 en place dans la structure de la Figure 1;

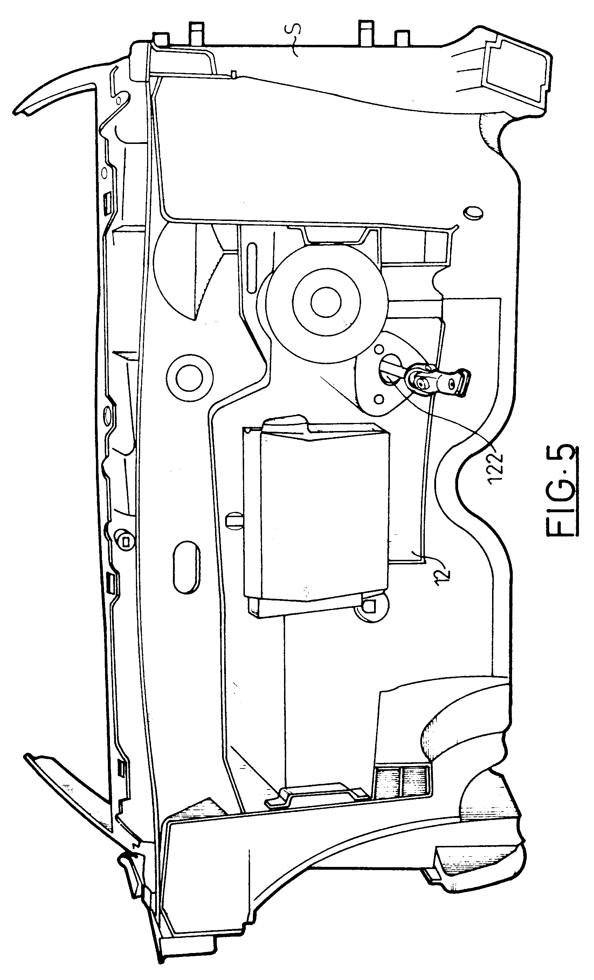

- la Figure 5 est une vue analogue à celle de la Figure 4 prise du côté compartiment antérieur;

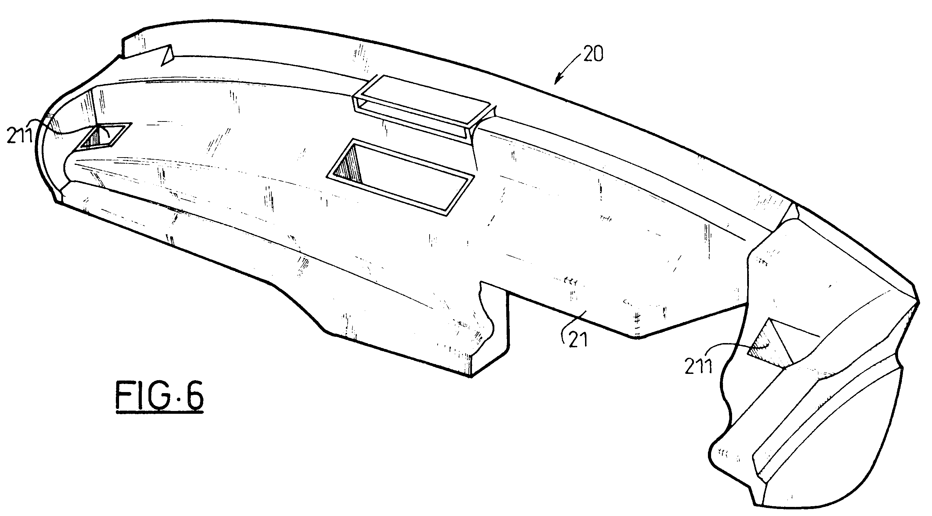

- la Figure 6 est une vue perspective d'un revêtement incliné, prise de la gauche de l'intérieur;

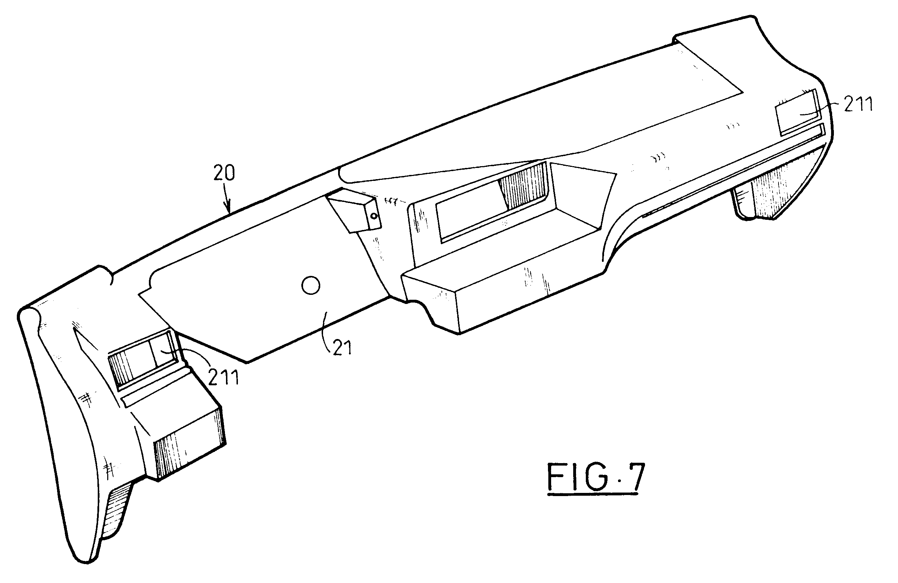

- la Figure 7 est une vue du revêtement de la Figure 6, prêt à être mis en place, prise de l'extérieur;

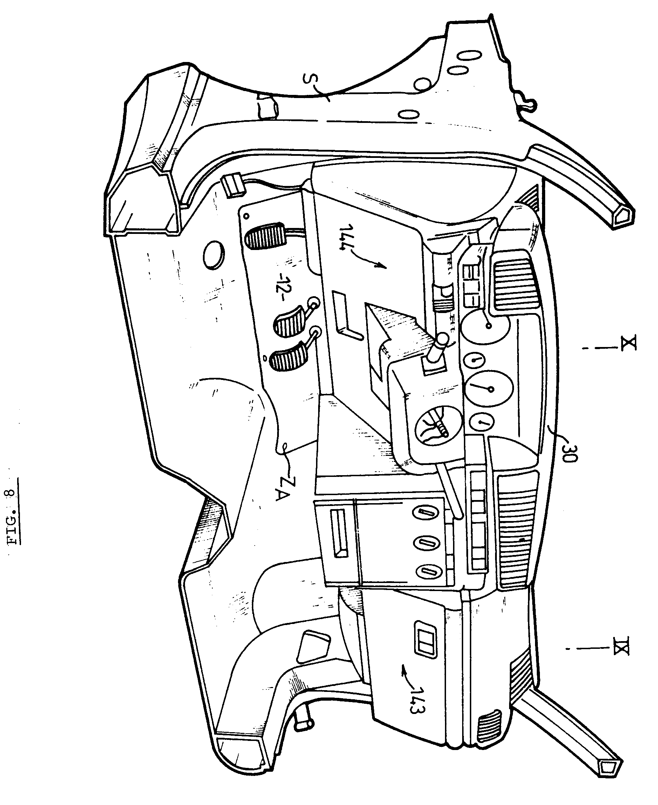

- la Figure 8 est une vue d'un mode de réalisation de la planche de bord selon l'invention en place dans la structure de la Figure 1;

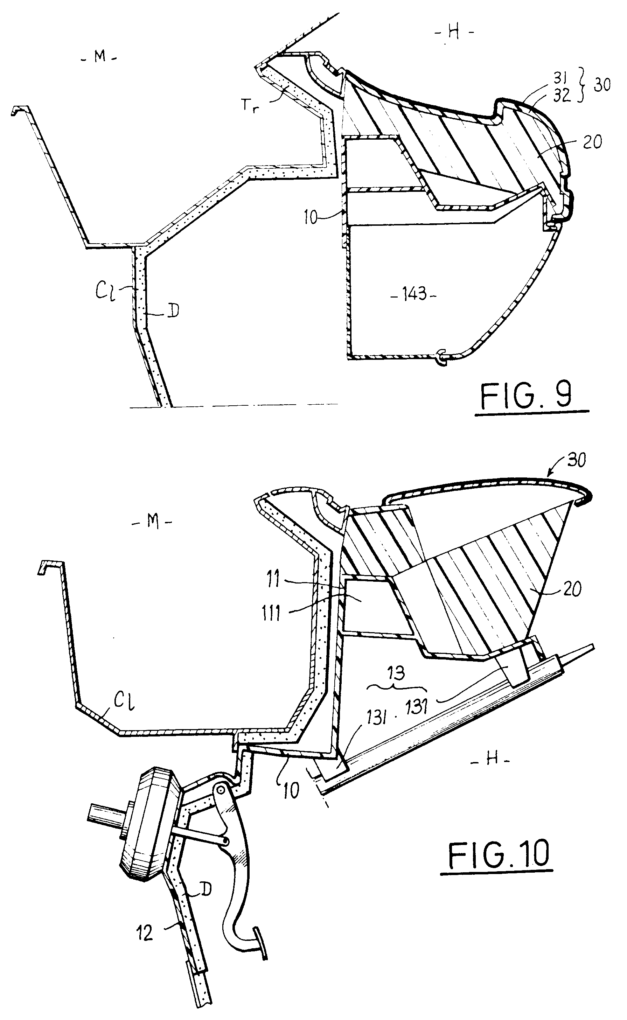

- la Figure 9 est une section partielle selon le plan vertical IX de la Figure 8; et
- la Figure 10 est une section partielle selon le plan vertical X de la Figure 8.

Les techniques de construction des véhicules automobiles, et en particulier de leur planche de bord, étant bien connues dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, un même numéro de référence identifie toujours un élément homologue, quel que soit le mode de réalisation.

Pour la commodité de l'exposé, on décrira successivement tout ce qui contribue à l'invention avant d'en exposer la manière de le fabriquer et les avantages qu'il procure.

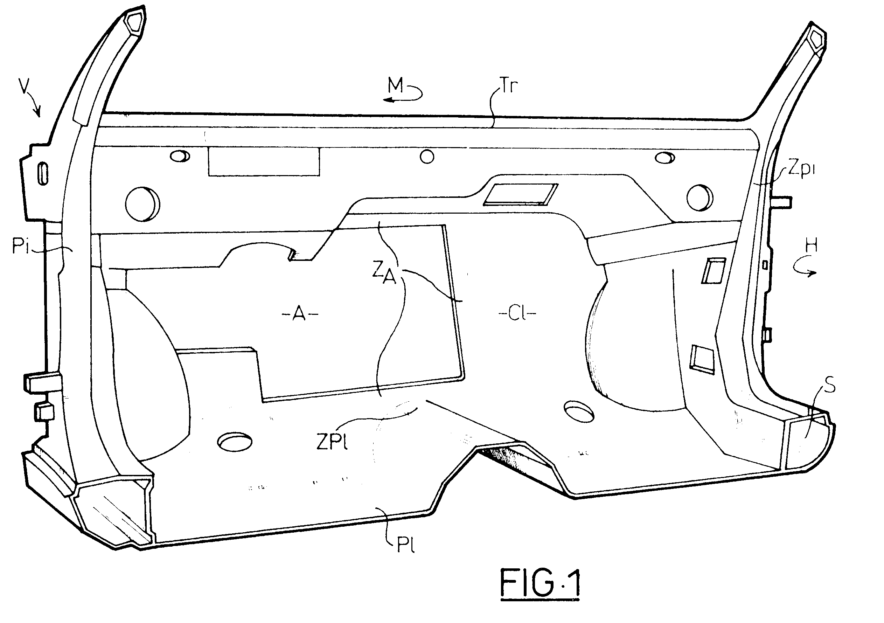

Comme on le voit, en particulier sur la vue partielle de la Figure 1, un véhicule V est constitué d'une structure ou coque S qui délimite un habitacle H et un compartiment antérieur M, le plus souvent moteur.

Comme on l'observe, cette structure S comprend notamment un plancher Pₗ avec deux pieds ou montants latéraux Pᵢ destinés à recevoir notamment des portes et qui sont joints, habituellement, par une traverse Tᵣ; cette traverse Tᵣ délimite la partie inférieure d'une baie où sera placé un pare-brise. Une cloison ou tablier Cₗ sépare le compartiment antérieur M de l'habitacle H. Cette cloison Cₗ est percée d'un ajour A, d'aire relativement réduite et de configuration géométrique relativement simple pour les raisons qui apparaîtront par la suite. Cette structure S est munie à l'intérieur, de zones de fixation Z. Ces zones de fixation Z se répartissent de préférence en zones latérales Z_{Pi} sur les pieds ou montants Pᵢ, une zone transversale Z_{Pl} sur le plancher Pₗ, ainsi qu'une zone médiane Z_{A} à proximité de l'ajour A.

La position et la taille de l'ajour A sont choisies de manière à regrouper sur une aire minimale toutes les liaisons entre compartiment antérieur M et habitacle H afin d'asurer une meilleure insonorisation de ce dernier. C'est pourquoi, s'y trouvent rassemblés notamment la colonne de direction, le faisceau électrique, le pédalier avec ses cables d'embrayage et d'accélération, la climatisation, la timonerie de commande ouverture/fermeture du capot du compartment antérieur, etc,...

Cette coque ou structure S est faite, comme il est classique, d'éléments le plus souvent métalliques, mécano-soudés.

Une doublure D habille la cloison C_{L} de préférence du côté de l'habitacle H. Cette doublure a un rôle technique et un rôle de confort. En effet, cette doublure, habituellement multistrate, contribue à la protection contre l'incendie et aussi à l'isolation de l'habitacle afin que les bruits du compartiment antérieur et la chaleur qu'il peut émettre, ne se propagent pas dans l'habitacle au risque de compromettre le confort des occupants.

Comme on peut l'observer sur les diverses figures du dessin, une planche de bord selon l'invention, destinée à recevoir et supporter pour en être équipée, des sous-ensembles préconfectionnés et prévérifiés afin de constituer une entité prête à être installée dans un véhicule et à être fixée au moins partiellement à la cloison de celui-ci séparant le compartiment antérieur de l'habitacle, comprend essentiellement, entre autres, une armature ou ossature 10, un revêtement 20 et une garniture 30.

L'ossature 10, qui est rigide et construite de manière à être auto-portante, présente une configuration relativement simple. Elle a un rôle essentiellement technique en servant principalement de support ou servante d'atelier et en participant éventuellement à la robustesse de la structure. Cette ossature n'a pratiquement plus aucun rôle de participation à la présentation, à l'apparence.

L'ossature 10 est faite essentiellement d'une poutre 11, éventuellement d'un panneau 12, d'au moins un support 13 et d'au moins un alvéole 14.

La poutre 11 qui est disposée transversalement à l'endroit qui constituera la partie haute de la planche de bord lorsque celle-ci sera installée dans l'habitacle, se présente à la manière d'un caisson 111 notamment prismatique, de préférence ouvert en direction du compartiment antérieur. Par exemple, dans la poutre 11, sont ménagés des évents 112 débouchés, destinés à être orientés vers l'habitacle. Ces évents 112 dont la géométrie, la répartition et le nombre sont fixés au gré des besoins sont, par exemple, destinés à la climatisation de l'habitacle comme on le comprendra par la suite.

Le panneau 12, qui prolonge vers le bas, à un endroit approprié, la poutre 11, est relativement plan, au moins localement, et a une configuration et une aire adaptées à celle de l'ajour A. En particulier, le panneau 12 présente un pourtour 121 destiné à coopérer avec la zone médiane de fixation Z_{A} de l'ajour A de manière à le clore, comme on le comprendra par la suite. Dans le panneau 12, sont ménagés des passages 122 à usage essentiellement mécanique; ces passages permettent l'installation notamment de la colonne de direction et du pédalier avec éventuellement ses paliers, câbles et assistance au freinage, afin de permettre la transmission des instructions du conducteur qui est logé dans l'habitacle H, notamment au compartiment antérieur M où sont situés l'essentiel des organes nécessaires au pilotage du véhicule. Dans ce panneau 12 sont aussi ménagées des traversées 123 à usage essentiellement électrique; ces traversées permettent la continuité électrique à l'aide de fils et/ou de connecteurs entre ce qui est situé de part et d'autre de la cloison ou tablier Cₗ.

Les supports 13 se présentent par exemple à la manière de protubérances 131. Ces supports sont notamment destinés à recevoir la colonne de direction avec tous ses accessoires, par exemple le "commodo" pour la commande de l'éclairage, des indicateurs de changement de direction, de l'avertisseur sonore, etc,....

Les alvéoles 14 se présentent à la manière d'au moins un logement 141, un réceptacle 142, un boîtier 143 et un coffret 144 ou analogue.

Le ou les logements 141 sont destinés à la climatisation de manière à recevoir par exemple des répartiteurs de flux d'air, des échangeurs, des motoventilateurs, dont les uns sont situés dans l'habitacle H et dont certains autres sont situés dans le compartiment antérieur M. Le réceptacle 142 est par exemple destiné à recevoir un combiné radio. Le boîtier 143 est par exemple destiné à servir de vide-poche et/ou de boîte à gants. Le coffret 144 est par exemple destiné à recevoir les servitudes électriques tels que les fusibles et relais.

On voit donc ainsi en quoi consiste le rôle essentiellement technique de cette ossature 10. C'est cette ossature qui supporte aussi bien au moment de la construction du véhicule qu'ultérieurement, celui-ci terminé et en état de marche, la colonne de direction et ses accessoires, le pédalier et ses accessoires, la climatisation et ses accessoires, les servitudes électriques, etc,...

L'ossature 10, une fois prééquipée et contrôlée, est fixée définitivement à la structure S notamment à l'aplomb des zones latérales, transversale et médiane, Z_{Pi}, Z_{Pl} et Z_{A} respectivement. On utilise pour ce faire toute technique classique courante appropriée notamment à la nature des matériaux à joindre, par exemple soudage, rivettage, vissage, collage,...De préférence, la fixation sur la zone médiane Z_{A} du pourtour 121 du panneau 12 se fait par appui direct contre la cloison Cₗ afin d'obtenir une bonne étanchéité qui est parfaite à l'aide d'un joint approprié.

Le revêtement 20 est destiné à être rapporté sur l'ossature 10 de manière à être relativement interchangeable. Ce revêtement a un rôle presque essentiellement destiné à la présentation.

Ce revêtement 20 est constitué principalement d'un coussin 21 qui lui donne au moins pour partie sa forme extérieure. Ce coussin relativement rigide, est transpercé notamment de conduits 211, par exemple destinés à être mis en registre avec les évents 112 pour constituer, au moins pour partie, des conduits de climatisation voire de dégivrage.

Ce revêtement est relativement facilement amovible. C'est pourquoi, le revêtement 20 est rapporté sur l'ossature 10 à laquelle il est fixé par exemple par vissage ou encliquetage élastique. S'il y a lieu, ce revêtement amovible peut aussi être directement surmoulé sur l'ossature ou bien collé.

La garniture 30 qui est rapportée et de préférence interchangeable, se compose du côté externe de ce qui constituera l'extérieur et qui sera apparent dans l'habitacle, d'une housse ou "peau" 31 sous laquelle se trouve du côté interne un rembourrage 32. C'est cette "peau" 31 qui donne l'aspect et le toucher finals à la planche de bord. Cette garniture 30 est munie aux endroits appropriés d'orifices ou dégagements destinés à être mis, le cas échéant, en correspondance avec les évents 112 et les divers alvéoles 14.

L'ossature 10 est de préférence faite en au moins une résine synthétique avec des charges et des fibres appropriées au besoin, afin de lui conférer les caractéristiques mécaniques aptes a la rendre auto-portante, de manière qu'elle puisse servir notamment de servante d'atelier pour les raisons qui ressortent de ce qui précède et de ce qui suit, ainsi que des caractéristiques aptes à lui permettre de satisfaire aux normes édictées en manière de sécurité et imposées par les Pouvoirs Publics.

La configuration géométrique relativement simple adoptée permet de fabriquer aisément une telle ossature 10 par des techniques de production classiques, par exemple de moulage par injection ou compression voire par thermoformage.

Des matériaux qui conviennent à la fabrication de l'ossature 10 sont, par exemple, des résines thermoplastiques classiques (polypropylène, acétobutyrate-styrène, des polyamides chargés ou non, des Thermoplastiques Renforcées Estampables), des résines thermodurcissables (SMC, DCPD, polydécyclopentadiène),...On peut bien sûr aussi utiliser une tôle appropriée dont la mise en forme est obtenue par des techniques classiques par exemple estampage, emboutissage, etc,...

Le revêtement 20 est fait notamment en une mousse de préférence rigide voire souple par exemple à base de polyuréthane basse pression qui, comme on le sait, est très facile à mouler ou bien à base de polypropylène. En choisissant convenablement le matériau dont est fait le revêtement on comprend immédiatement que ce dernier participe non seulement à la présentation de la planche de bord selon l'invention mais aussi contribue à la sécurité des occupants du véhicule en cas de choc à composante frontale importante, en absorbant au moins une partie de l'énergie à l'impact.

La garniture 30 est aussi de préférence faite en une matière synthétique. Elle peut être confectionnée de manière que la "peau" 31 se présente à la façon d'une housse ou coquille préformée, relativement auto-portante, sur laquelle peut être rapporté le rembourrage 32 fait par exemple d'une mousse souple. Une autre manière de procéder peut consister à surmouler le rembourrage 32 sur la "peau" 31 ou bien à faire en sorte que cette "peau" 31 soit auto-formée directement sur une planche de bord selon l'invention destinée à recevoir et à supporter pour en être équipée des sous-ensembles préconfectionnés et prévérifiés d'un poste de conduite, afin de constituer une entité prête à être installée dans un véhicule et fixée au moins partiellement à une cloison de celui-ci qui sépare un compartiment antérieur d'un habitacle de la structure et qui est transpercée d'un ajour avec des zones de fixation. Cette garniture peut aussi être confectionnée par rotomoulage voire par surmoulage.

L'ossature 10 autoportante étant fabriquée comme indiqué auparavant, celle-ci est équipée de pratiquement tous les accessoires nécessaires au pilotage et qui forment le poste de conduite, et dont un certain nombre ont été énumérés notamment au début de la partie introductive. On rappelera par exemple, pour mémoire, le pédalier avec l'assistance au freinage et la colonne de direction, la climatisation, les servitudes électriques, les cadrans, commutateurs; etc.. On comprend que cette entité que constitue l'armature et tout ce qu'elle supporte peut être préparée et vériliée en dehors de la ligne d'assemblage proprement dite des véhicules, et comprendre tous les éléments permanents qui sont communs à un modèle, quelles qu'en soient la version et les options adoptées par le client qui recevra le véhicule.

Ensuite, cette armature équipée reçoit le revêtement 20 auquel on a au préalable, au besoin, associés des visières anti-reflets, des buses de climatisation, des volets, portes et capots pour les logements, réceptacles, boîtiers et coffrets et, éventuellement, d'autres enjoliveurs. Ce revêtement est aussi équipé de ce qui constituera les conduits de climatisation et/ou de dégivrage si ceux-ci ne font pas partie intégrante, ne font pas corps avec le coussin. Ces conduits peuvent se présenter par exemple sous la forme de demi-gouttières ou analogues qui sont assemblées à ce moment. Comme on l'a indiqué précédemment, ce revêtement, qui est rapporté, est relativement interchangeable, et fixe pour l'essentiel la configuration extérieure de la planche de bord. Etant donné sa nature, ce revêtement peut être adapté facilement au changement de mode et, éventuellement, adapté à un modèle particulier d'une série du véhicule.

Enfin, on place la garniture 30 qui, elle aussi est rapportée et interchangable, et qui elle aussi peut suivre les tendances de la mode et/ou le choix particulier des options adoptées par un client afin, par exemple, d'en assortir le coloris au type des sièges et/ou à la teinte du véhicule.

On comprend donc tous les avantages de l'invention. En effet, grâce à la planche de bord perfectionnée selon l'invention, avec un minimun de pièces il est possible d'incorporer le maximum des désidarata des constructeurs en ce qui concerne notamment la facilité de montage et la modicité des coûts, tout en procurant aussi un meilleur confort et une meilleure sécurité, et de plus aussi en satisfaisant les désidérata particuliers de chaque client.

L'adoption d'une ossature relativement permanente et simplifiée qui est rigide et auto-portante, d'une part, et d'un revêtement et d'une garniture rapportés et interchangeables à des stades différents de production soit au moment de la définition d'une ligne ou d'une gamme, soit au moment du choix des options offertes à l'acheteur, d'autre part, il est possible de suivre au plus près à la fois les impératifs techniques et économiques des constructeurs et les souhaits des utilisateurs, qui sont souvent présenter comme antinomiques ou contradictoires. En effet, ceci résulte notamment de la séparation des rôles technique et de présentation attribués aux constituants. La solution selon l'invention permet, entre autres, d'obtenir un bon découplage phonique entre les éléments associés.

Il y a lieu de noter aussi que la planche de bord perfectionnée selon l'invention, outre sa participation directe à la sécurité peut aussi servir de support à un éventuel sac de protection autogonflable pour les occupants des sièges avant, souvent désigné dans la technique par l'appellation "air bag".

## Revendications

1. Planche de bord destinée à recevoir et à supporter pour en être équipée, des sous-ensembles préconfectionnés et prévérifiés d'un poste de conduite afin de constituer une entité prête à être installée dans un véhicule (V) et fixée au moins partiellement à une cloison (Cl) de celui-ci qui sépare un compartiment antérieur (M) d'un habitacle (H) de la structure (S) et qui est transpercée d'un ajour (A) avec des zones de fixation (Z), planche de bord caractérisée en ce qu'elle comprend, d'une part en permanence, une ossature (10) rigide, autoportante et qui sert de support et qui est munie d'une poutre (11) en caisson, et qu'elle comprend d'autre part, entre autres, un revêtement (20) rigide, rapporté et amovible qui fixe approximativement la forme extérieure de la planche de bord, et une garniture (30) rapportée et amovible qui épouse ce revêtement (20) et fixe l'apparence de la planche de bord.

2. Planche de bord selon la revendication 1 et destinée à être fixée à la cloison (Cl) transpercée de l'ajour (A). caractérisée en ce que l'ossature (10) comprend un panneau (12) pratiquement plan avec un pourtour (121) dont la taille est adaptée à celle de cet ajour (A) afin de le clore et d'y être maintenu par des zones de fixation (Z_{A}).

3. Planche de bord selon la revendication 1 ou 2, caractérisée en ce que l'ossature (10) comprend au moins un support (13).

4. Planche de bord selon l'une quelconque des revendications 1 à 3, caractérisée en ce que l'ossature (10) comprend au moins un alvéole (14).

5. Planche de bord selon l'une quelconque des revendications 1 à 4, caractérisée en ce que la poutre (11) en caisson a une configuration prismatique (111) de préférence ouvert en direction du compartiment antérieur (M).

6. Planche de bord selon la revendication 5, caractérisée en ce que la poutre (11) en caisson (111) est transpercée d'évents (112) débouchant en direction de l'habitacle (H).

7. Planche de bord selon l'une quelconque des revendications 1 à 6, caractérisée en ce que le panneau (12) est transpercé de passages (122) et de traversées (123).

8. Planche de bord selon l'une quelconque des revendications 3 à 7, caractérisée en ce que le support (13) a la configuration de protéburances (131).

9. Planche de bord selon l'une quelconque des revendications 4 à 8, caractérisée en ce que les alvéoles (14) ont la configuration d'au moins un logement (141), réceptacle (142), boitier (143), coffret (144).

10. Planche de bord selon l'une quelconque des revendications 1 à 9, caractérisée en ce que le revêtement (20) est un coussin (21) en mousse rigide.

11. Planche de bord selon la revendication 10 et selon l'une quelconque des revendications 6 à 9, caractérisée en ce que dans le coussin (21) sont ménagés des conduits (211) destinés à être mis en registre localement avec les évents (112).

12. Planche de bord selon l'une quelconque des revendications 1 à 11, caractérisée en ce que la garniture (30) se présente à la manière d'une housse (31) externe avec un rembourrage (32) interne.

13. Planche de bord selon la revendication 12, caractérisée en ce que housse (31) et rembourrage (32) sont rapportés l'un sur l'autre.

14. Planche de bord selon la revendication 12, caractérisée en ce que housse (31) et rembourrage (32) font corps l'un avec l'autre.

15. Planche de bord selon l'une quelconque des revendications 1 à 9, caractérisée en ce que l'ossature (10) est en résine synthétique de préférence chargée et renforcée de fibres.

16. Planche de bord selon l'une quelconque des revendications 10 et 11, caractérisée en ce que le revêtement (20) est une mousse basse densité.

17. Planche de bord selon la revendication 14, caractérisée en ce que housse (31) et rembourrage (32) sont surmoulés ou auto-formés.

## Claims

1. Dashboard intended to receive and to support, for being equipped therewith, prefabricated and pretested subassemblies of a driver's cab so as to constitute an entity ready to be installed in a vehicle (V) and to be fixed, at least partially to a partition wall (Cl) of the latter which separates a front compartment (M) from passenger compartment (H) of the structure (S) and which is pierced through by an opening (A) with fixing zones (Z); which dashboard is characterised in that it comprises on the one hand a permanent rigid and self-supporting framework (10) which serves as support and which is fitted with a box-section member (11); and in that it comprises on the other hand, inter alia, a removably attached rigid cover (20) which approximately fixes the exterior shape of the dashboard, and a removably attached lining (30) which matches this cover (20) and fixes the appearance of the dashboard.

2. Dashboard according to Claim 1 and intended to be fixed to the partition wall (Cl) pierced through by the opening (A), characterised in that the framework (10) comprises a virtually flat panel (12) with a perimeter (121) the size of which is adapted to that of this pening (A) so as to close it off and be held therein by fixing zones (Z_{A}).

3. Dashboard according to Claim 1 or 2, characterised in that the framework (10) comprises at least one support (13).

4. Dashboard according to any one of Claims 1 to 3, characterised in that the framework (10) comprises at least one cavity (14).

5. Dashboard according to any one of Claims 1 to 4, characterised in that the box-section member (11) has a prismatic configuration (111) which is preferably open in the direction of the front compartment (M).

6. Dashboard according to Claim 5, characterised in that the box (111)-section member (11) is pierced through by vents (112) emerging in the direction of the passenger compartment (H).

7. Dashboard according to any one of Claims 1 to 6, characterised in that the panel (12) is pierced through by passages (122) and by lead-throughs (123).

8. Dashboard according to any one of Claims 3 to 7, characterised in that the support (13) has the configuretion of protuberances (131).

9. Dashboard according to any one of Claims 4 to 8, characterised in that the cavities (14) have the configuration of at least one housing (141), receptacle (142), case (143), enclosure (144).

10. Dashboard according to any one of Claims 1 to 9, characterised in that the cover (20) is a cushion (21) made from rigid foam.

11. Dashboard according to Claim 10, and according to any, one of Claims 6 to 9, characterised in that the cushion (21) is provided with ducts (211) intended to be put into local registration with the vents (112).

12. Dashboard according to any one of Claims 1 to 11, characterised in that the lining (30) is presented in the manner of an external covering (31) with an internal padding (32).

13. Dashboard according to Claim 12, characterised in that the covering (31) and padding (32) are attached to ono another.

14. Dashboard according to Claim 12, characterised in that the covering (31) and padding (32) form one body.

15. Dashboard according to any one of Claims 1 to 9, characterised in that the framework (10) is made from synthetic resin preferably filled and reinforced by fibres.

16. Dashboard according to either of Claims 10 or 11, characterised in that the cover (20) is made from a low-density foam.

17. Dashboard according to Claim 14, characterised in that covering (31) and padding (32) ore overmoulded or formed by themselves.

## Patentansprüche

1. Armaturenbrett, dazu bestimmt, auf einem Leitstand vorkonfektionierte und vorüberprüfte Untereinheiten, mit denen es ausgestattet werden soll, aufzunehmen und zu tragen, um eine fertige Einheit zu bilden, die in ein Fahrzeug (V) eingebaut wird und wenigstens teilweise an einer Trennwand (Cl) desselben angebracht wird, die einen vorderen Raum (M) von einem Innenraum (H) der Struktur (S) trennt und die von einem Montageausschnitt (A) mit Befestigungszonen (Z) durchsetzt ist, wobei das Armaturenbrett dadurch gekennzeichnet ist, daß es einerseits immer ein starres, selbsttragendes Gerippe (10) aufweist, das als Träger dient und mit einem hohlen Träger (11) versehen ist, und daß es andererseits eine starre, aufsetzbare und abnehmbare Auskleidung (20) aufweist, die näherungsweise die äußere Form des Armaturenbrettes festlegt, und einen aufsetzbaren und abnehmbaren Besatz (30) der sich an die Auskleidung (20) anschließt und das Erscheinungsbild des Armaturenbrettes festlegt.

2. Armaturenbrett nach Anspruch 1 und dazu bestimmt, an der Trennwand (Cl) befestigt zu werden, die von dem Montageausschnitt (A) durchbrochen ist, dadurch gekennzeichnet, daß das Gerippe (10) eine Tafel (12), praktisch eben, aufweist, mit einem Umriß (121), dessen Größe an den des Montageausschnittes (A) angepaßt ist, um diesen zu schließen und dort durch die Befestigungszonen (CA) gehalten zu werden.

3. Armaturenbrett nach Anspruch 1 oder 2, dadurch gekennzeichnet, daß das Gerippe (10) wenigstens einen Stützträger (13) aufweist.

4. Armaturenbrett nach einem der Ansprüche 1 bis 3, dadurch gekennzeichnet, daß das Gerippe (10) wenigstens eine Zelle (14) aufweist.

5. Armaturenbrett nach einem der Ansprüche 1 bis 4, dadurch gekennzeichnet, daß der Hohlträger (11) eine prismatische Ausbildung (111) aufweist, die bevorzugt in Richtung des vorderen Raumes (M) geöffnet ist.

6. Armaturenbrett nach Anspruch 5, dadurch gekennzeichnet, daß der Hohl(111)-träger (11) von Luftlöchern (112) durchbrochen ist, die in Richtung des Innenraumes (H) münden.

7. Armaturenbrett nach einem der Ansprüche 1 bis 6, dadurch gekennzeichnet, daß die Tafel (12) von Durchgängen (120) und Durchlässen (123) durchbrochen ist.

8. Armaturenbrett nach einem der Ansprüche 3 bis 7, dadurch gekennzeichnet, daß der Stützträger (13) als Ausbildung als Ausstülpungen (131) hat.

9. Armaturenbrett nach einem der Ansprüche 4 bis 8, dadurch gekennzeichnet, daß die Zellen (14) die Ausbildung als wenigstens eine Ausnehmung (141), Aufnahmeeinrichtung (142), Gehäuse (143), Koffer (144) haben.

10. Armaturenbrett nach einem der Ansprüche 1 bis 9, dadurch gekennzeichnet, daß die Auskleidung (20) ein Polster (21) aus starrem Schaum ist.

11. Armaturenbrett nach Anspruch 10 und nach einem der Ansprüche 6 bis 9, dadurch gekennzeichnet, daß in dem Polster (21) Leitungen (211) untergebracht sind, die dazu bestimmt sind, daß sie lokal mit den Lüftungsöffnungen (112) verbunden werden.

12. Armaturenbrett nach einem der Ansprüche 1 bis 11, dadurch gekennzeichnet, daß sich der Besatz (30) nach Art einer äußeren Decke (31) mit einer inneren Polsterung (32) zeigt.

13. Armaturenbrett nach Anspruch 12, dadurch gekennzeichnet, daß die Decke (31) und die Polsterung (32) aufeinandergesetzt sind.

14. Armaturenbrett nach Anspruch 12, dadurch gekennzeichnet, daß die Decke (31) und die Polsterung (32) einstückig miteinander ausgebildet sind.

15. Armaturenbrett nach einem der Ansprüche 1 bis 9, dadurch gekennzeichnet, daß das Gerippe (10) aus Kunstharz, bevorzugt mit Fasern beladen und verstärkt, besteht.

16. Armaturenbrett nach einem der Ansprüche 10 und 11, dadurch gekennzeichnet, daß die Auskleidung (20) ein Schaum niedriger Dichte ist.

17. Armaturenbrett nach Anspruch 14, dadurch gekennzeichnet, daß die Decke (31) und die Polsterung (32) aufgeformt oder selbständig geformt sind.
